# EUROPEAN PATENT SPECIFICATION

(11) **EP 3 671 789 B1**
(45) Date of publication and mention of the grant of the patent: **23.06.2021**
(21) Application number: 18215462.5
(22) Date of filing: 21.12.2018
(51) Int. Cl.: H01H 31/00, H01H 31/32, H02B 13/035, H02B 13/075

(54) **MEDIUM OR HIGH VOLTAGE SWITCHGEAR WITH A THREE POSITION SWITCH**
MITTEL- ODER HOCHSPANNUNGSSCHALTGERÄT MIT DREISTELLUNGSSCHALTER
APPAREILLAGE DE COMMUTATION MOYENNE OU HAUTE TENSION DOTÉ D'UN COMMUTATEUR À TROIS POSITIONS

(43) Date of publication of application: 24.06.2020
(73) Proprietor: ABB Schweiz AG, 5400 Baden (CH)
(72) Inventor: Gentsch, Dietmar, 40882 Ratingen (DE); Reuber, Christian, 47877 Willich (DE); Stadnicki, Adrian, 40883 Ratingen (DE); Fußbahn, Olaf, 40885 Ratingen (DE); Zitzmann, Robby, 40882 Mettmann (DE)
(74) Representative: Maiwald Patent- und Rechtsanwaltsgesellschaft mbH

(56) References cited:
- CN-B- 106 611 937
- CN-U- 203 205 758
- JP-A- 2002 051 416
- US-A1- 2009 266 695

## Description

### FIELD OF THE INVENTION

The present invention relates to a medium or high voltage switchgear with a three position switch, and to a medium or high voltage switchgear with three such switches.

### BACKGROUND OF THE INVENTION

Three position or 3pos switches are an important component of a switchgear, especially for a Gas Insulated Switchgear (GIS). Three position switches are generally used to connect a cable to a busbar (1st position), to isolate the cable (2nd position), and to earth the cable (3rd position). Two basic types of three position switches are known: one type uses a rotating knife to realise the three positions; the other type uses a movable piston. For higher ratings, the switch with the movable piston is advantageous because the generally cylindrical conductors have higher cross-sections for higher nominal currents, and sharp edges can be avoided for higher nominal voltages.

However, three position switches with piston and tulip contacts are relatively large and require relatively large gas compartments. Furthermore, state-of-the-art three position switches do not support short current paths inside of a switchgear panel.

CN 203205758 U discloses a three position switch with a movable piston according to the state of the art.

There is a need to address these issues.

### SUMMARY OF THE INVENTION

Therefore, it would be advantageous to have an improved three position switch for a medium or high voltage switchgear.

The object of the present invention is solved with the subject matter of the independent claim 1, wherein further embodiments are incorporated in the dependent claims. According to the invention, there is provided a medium or high voltage switchgear with a three position switch according to claim 1. The three position switch comprises a tube shaped conductor for connection of a cable and the three position switch comprises an earthing contact. The earthing contact is arranged inside of and coaxial to the tube shaped conductor.

The three position switch comprises a piston. The piston is configured to move axially within the tube shaped conductor. In a connected position of the three position switch, the piston is at a position axially within the tube shaped conductor configured to enable current to flow to the cable.

In the connected position the piston connects a busbar of the medium or high voltage switchgear to a cable contact of the tube shaped conductor for connection of the cable, thereby enabling current to flow from the busbar to the cable.

ln the connected position the piston is isolated from the earthing contact.

ln an isolated position of the three position switch the piston is at a position axially within the tube shaped conductor such that current is not enabled to flow to the cable.

In an example, in the isolated position the piston is electrically isolated from a busbar of the medium or high voltage switchgear and the piston is electrically isolated from the earthing contact.

In an example, in the isolated position the piston is connected to a cable contact of the tube shaped conductor for connection of the cable.

ln an earthed position of the three position switch the piston is at a position axially within the tube shaped conductor such that the piston connects the tube shaped conductor to the earthing contact.

In an example, in the earthing position the piston is connected to a cable contact of the tube shaped conductor for connection of the cable.

In an example, in the earthed position the position of the piston is configured to provide an indication to a user that the medium or high voltage switchgear is earthed.

In an example, in the isolated position the position of the piston is configured to provide an indication to a user that the medium or high voltage switchgear is isolated.

In an example, there is provided a medium or high voltage switchgear with three three position switches according to the invention, wherein the three three position switches are configured to be driven in parallel.

In an example, the respective pistons of each of the three position switches are configured to be driven in parallel.

In an example, a ceramic layer is placed between the cable contact and the earth contact of the three position switch.

The above aspects and examples will become apparent from and be elucidated with reference to the embodiments described hereinafter.

### BRIEF DESCRIPTION OF THE DRAWINGS

Exemplary embodiments will be described in the following with reference to the following drawings:
Figs. 1-3 show an enclosure of a gas insulated compartment for a three position switch;
Figs. 4-6 show an enclosure of a gas insulated compartment for a known three position switch;
Fig. 7 shows an enclosure of a gas insulated compartment with three of the three position switches as shown in Figs. 1-3;
Fig. 8 shows an enclosure of a gas insulated compartment with three of the three position switches as shown in Figs. 4-6;
Figs. 9-10 show examples of visual conformation of the position of the switch of Figs. 1-3; and
Fig. 11 shows a detailed example of an embodiment of the three position switch of Figs. 1-3.

### DETAILED DESCRIPTION OF EMBODIMENTS

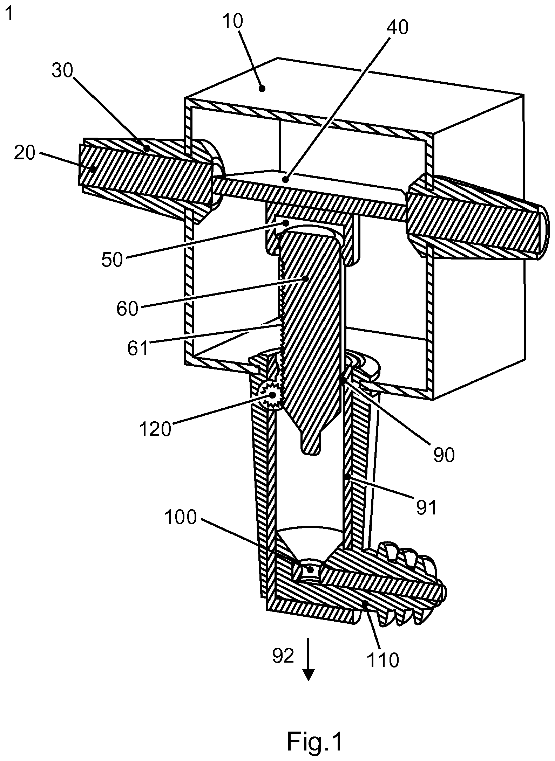

Figs. 1-3 show the principles of operation of the three position switch for a medium or high voltage switchgear as provided here.

These figures shows a medium or high voltage switchgear 1 with a three position switch. The three position switch comprises a tube shaped conductor 91 for connection of a cable and the three position switch comprises an earthing contact 100. The earthing contact is arranged inside of and coaxial to the tube shaped conductor.

In an example, the tube shaped conductor is cylindrically shaped.

According to an example, the three position switch comprises a piston 60. The piston is configured to move axially within the tube shaped conductor. In a connected position, as shown in Fig. 1, the piston is at a position axially within the tube shaped conductor configured to enable current to flow to the cable.

In an example, the piston is cylindrically shaped.

According to an example, in the connected position the piston connects a busbar 40 of the medium or high voltage switchgear to a cable contact 90 of the tube shaped conductor for connection of the cable. This enables current to flow from the busbar to the cable.

According to an example, in the connected position the piston is isolated from the earthing contact.

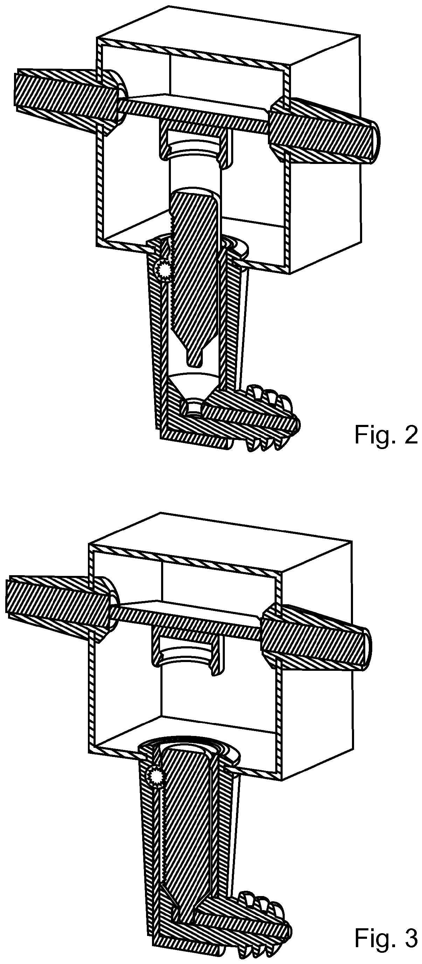

According to an example, in an isolated position, as shown in Fig. 2, the piston is at a position axially within the tube shaped conductor such that current is not enabled to flow to the cable.

According to an example, in the isolated position the piston is electrically isolated from the busbar 40 of the medium or high voltage switchgear and the piston is electrically isolated from the earthing contact.

According to an example, in the isolated position the piston is connected to the cable contact 90 of the tube shaped conductor for connection of the cable.

According to an example, in an earthed position, as shown in Fig. 3, the piston is at a position axially within the tube shaped conductor such that the piston connects the tube shaped conductor to the earthing contact.

According to an example, in the earthing position the piston is connected to the cable contact 90 of the tube shaped conductor for connection of the cable.

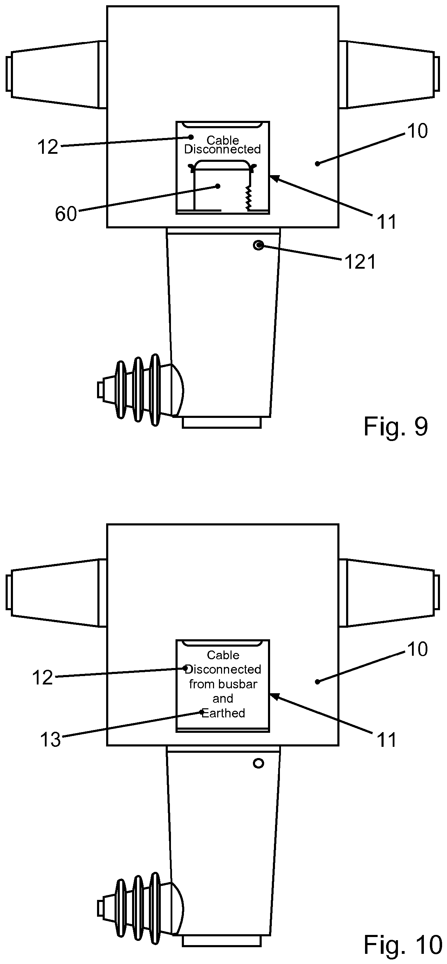

According to an example, in the earthed position the position of the piston is configured to provide an indication to a user that the medium or high voltage switchgear is earthed, as shown in Fig. 9.

According to an example, in the isolated position the position of the piston is configured to provide an indication to a user that the medium or high voltage switchgear is isolated, as shown in Fig. 10.

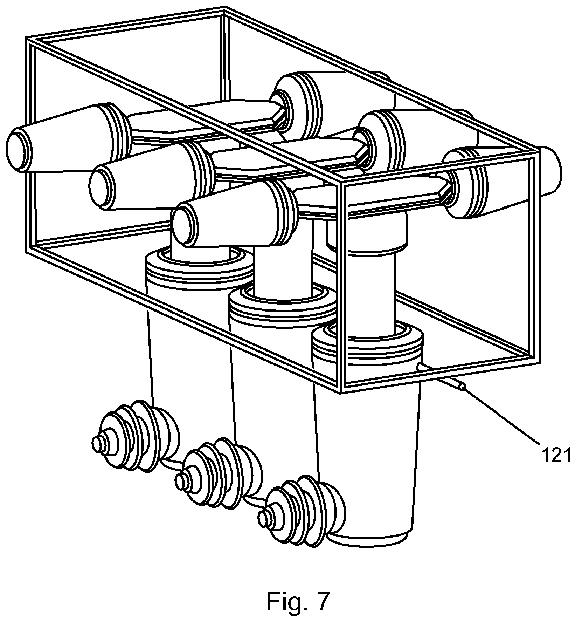

As shown in Fig. 7 a medium or high voltage switchgear can have three three position switches, described with reference to Figs. 1-3. The three three position switches can be configured to be driven in parallel.

According to an example, the respective pistons of each of the three three position switches are configured to be driven in parallel.

Continuing with Fig. 1, this shows the connected position of the three position switch 1. Current can flow from the busbar 40 over the contact 50 and the piston 60 to the cable contact 90. Then, the current will run through the conductor 91 to its lower end and further downwards in the direction indicated by the arrow 92. This arrangement allows for a very short current path through the three position switch; directly from the busbar down to the next compartment, e.g. a circuit breaker compartment, without large bending and without horizontal current flow. The advantages of a short current path in a switchgear panel, especially in a GIS panel, are a reduced amount of required conductor material, e.g. copper, in combination with lower ohmic losses in operation. Lower ohmic losses result in further advantages in the design and/or nominal current capability of the relevant GIS compartment due to a reduced temperature rise for a certain current.

With some rotations of the gear-wheel 120, a drive (not shown) can bring the piston 60 into the insulated position, as shown in Fig. 2. In this position, the cable contact is isolated both against the busbar and against the earthed contact due to the distances in the insulating gas and due to the design of the solid insulators.

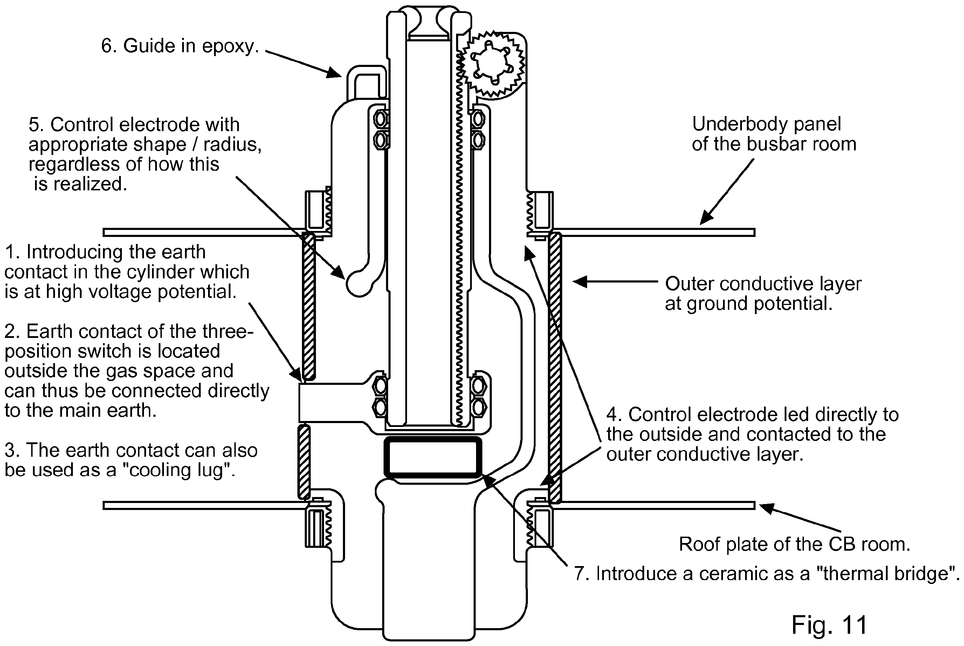

Real insulators may contain electrical shields for a better control of the electrical field according to the state of the art. Such shields are not shown here for clarity. Corners and edges of insulating and metallic parts may have more and smoother roundings than indicated in the figures 1 to 3, according to the state of the art, for a better control of the electrical field. See Fig. 11 for electrical shields and roundings.

When the drive continues to rotate the gear-wheel 120, the piston 60 will come further down and finally it will engage with the earthed contact 100, as shown in Fig. 3. While the direction of the current flow to the cable is downwards, as indicated by arrow 92, the direction of the earthed contact is laterally, or to the right in Fig. 3. The end of the earthed contact will be connected to earth potential.

The conductor 91 has a lateral opening for the lead through of the earthed connection. The conductor 91 and the earthed contact 100 are electrically insulated by the solid insulator 110, which can e.g. be made from epoxy. The insulator 110 may have outer rips where required to increase the creepage distance.

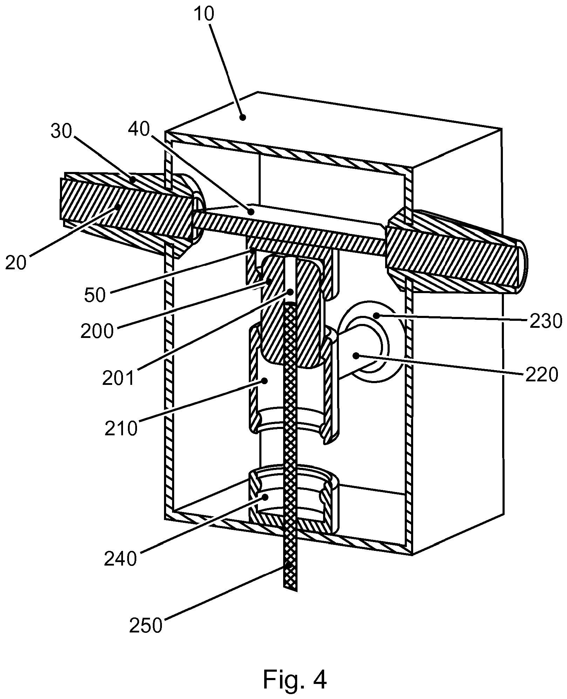

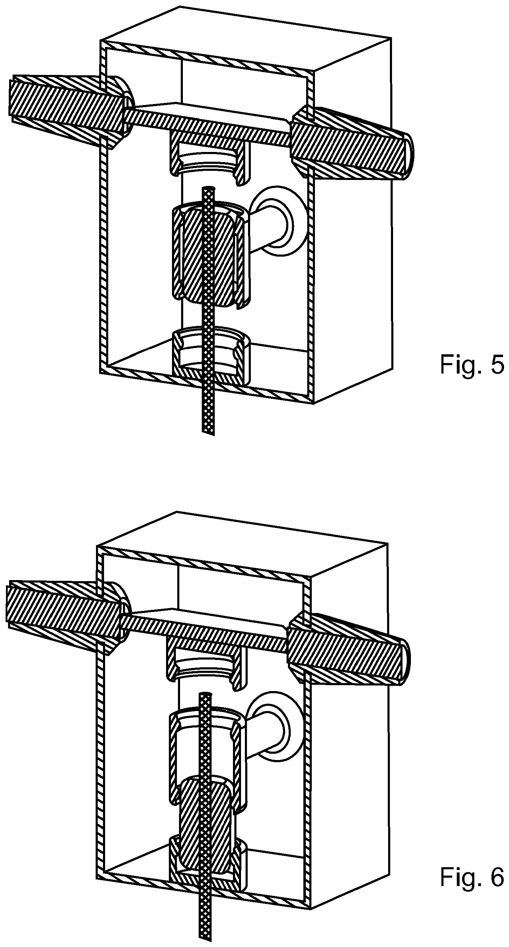

Figs. 4-6 show a state-of-the-art three position switch. Fig. 4 represents the connected position, where piston 200 connects the busbar contact 50 with the centre contact 210. The centre contact 210 is fixed to the connection to the cable bushing 220 and the cable bushing 230. The piston 200 has an internal thread 201 and it can therefore be moved by a rotation of the drive axis 250. Fig. 5 shows the insulated position, where the piston 200 is fully inside the centre contact 210. Fig. 6 shows the earthed position, where the piston 200 is connecting the earth contact 240 with the centre contact 210, and so the cable bushing is connected to earth potential.

A comparison of the three position switch provided here, and described with respect to Figs. 1-3, with the existing three position switch described with respect to Figs. 4-6 demonstrates that the state-of-the-art three position switch always needs a bended current path from the busbar to the cable. In Figs. 4-6 the current path goes through the back wall of the compartment and will require another bend downwards to reach e.g. a CB (circuit breaker) compartment and/or the cables. Certainly, it is also possible to design a three position switch compartment where the cable bushing is at the bottom, but then the bends of the current path will be inside the compartment, resulting in additional length of the conductors and therefore in higher resistive losses.

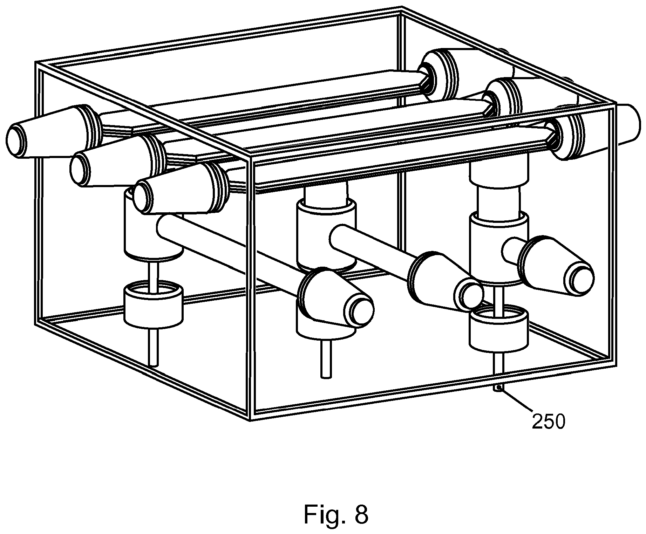

Another advantage of the arrangement of the arrangement shown in Figs. 1-3 becomes apparent when three phase designs are being considered, as it can be seen in Figs. 7 and 8, where the enclosure walls are transparent.

The usage of more than one phase requires at first a line-up of the busbars of several phases, usually 3, in one direction. The three position switch compartment has to be extended along this dimension. Fig. 7 shows that the three position switches as described with respect to Figs. 1-3 can also be lined-up in the same direction as the busbars. An additional increase of the compartment in another direction can be avoided. Further, the three connections 121 of the gear wheels 120 are aligned. They can easily be connected so that the same drive can directly be coupled for driving the three pistons in parallel. The mechanical connection 121 of the gearwheel 120 extends from the inside of the gas compartment to the outside. Therefore, the lead through of the connection 121 has to be realised in a way that is sufficiently gas tight and that allows for the required mechanical motion of the connection, e.g. for a rotation. For this lead through, state-of-the-art solutions exist. In case the mechanical connections 121 are connected from one phase to the next, as indicated in Fig. 7, the connection 121 requires two lead-throughs, one to the side where the drive is located and a second one to the next phase. The advantage in that case is the simple mechanical coupling of the gear wheels 120 for driving all phases at the same time. Alternatively, it is certainly possible to use only one lead through for one phase, and to couple the connections 121 externally to the enclosure, e.g. using gear wheels. The advantage in that case is the reduction of the number of the lead-throughs.

In contrast Fig. 8 shows that the state of the art three position switch requires to be lined-up in another direction than the busbars, generally perpendicular to the direction of the line-up of the busbars. The result is a relatively large size of the compartment. The comparison with Fig. 7 clearly shows that one of the advantages of the arrangement shown in Fig. 7 using three off the three position switch as shown in Figs. 1-3, is a considerable reduction of the required size of the three position switch compartment. Further, in Fig. 8 the drive axes 250 of the state of the art system are at different locations and cannot be easily connected. Additional means like gear-wheels, chains, belts or alike are required to connect the three axes to one drive for the system of Fig. 8.

Fig. 9 shows how the position of the three position switch of Figs. 1-3 can be visually confirmed. The enclosure 10 is equipped with a window 11. In case the switch is in the disconnected position, the upper end of the piston 60 can be seen in the middle of the window. Further, at the back side of the enclosure 10, there is an indication 12 for the disconnected position, e.g. the text "Cable Disconnected". This indication is not visible when the piston is in the connected position. Fig. 10 shows the same principle for the earthed position - in addition to 12, the indication 13 is visible to confirm that the cable is disconnected from the busbar and earthed.

Fig. 11 shows a detailed embodiment of the three position switch of Figs. 1-3. Electrical shielding electrodes were added to control the electrical field so that the required insulation levels can be achieved with small overall dimensions of the three position switch. Further, a ceramic layer is introduced between the cable contact and the earth contact, having good electrical insulating properties in combination with good thermal conducting properties. Suitable materials are e.g. aluminium oxide (Al₂O₃) or silicon carbide (SiC). The advantage of this ceramic layer is that thermal losses from the cable contact can be directed towards the relatively cold earth contact to reduce the temperature rise inside the compartment.

Reference numerals
- 1:: Medium voltage or High voltage switchgear
- 10:: Enclosure of the gas insulated compartment for the 3pos switch. Usually metallic.
- 11:: Inspection window in 10
- 12:: Indication for the disconnected position
- 13:: Indication for the earthed position
- 20:: Conductor of busbar bushing
- 30:: Insulator of busbar bushing
- 40:: Busbar
- 50:: Busbar contact, comprising e.g. a spiral contact as electrical contact element
- 60:: Piston with toothed rack
- 61:: Toothed rack of piston 60
- 90:: Cable contact, comprising e.g. a spiral contact as electrical contact element
- 91:: Conductor towards the cable
- 92:: Direction of current flow
- 100:: Earth contact, comprising e.g. a spiral contact as electrical contact element
- 110:: Insulator of cable contact and earth contact
- 120:: Gear-wheel of (not shown) drive
- 121:: Connection of the gear-wheel 120 to the (not shown) drive
- 200:: Piston
- 201:: Threaded section of piston 200
- 210:: Center contact
- 220:: Connection to cable bushing
- 230:: Cable bushing
- 240:: Earth contact
- 250:: Threaded drive axis; made of insulating material

## Claims

1. A medium or high voltage switchgear (1) with a three position switch, **characterized in that**
the three position switch comprises a tube shaped conductor (91) for connection of a cable and the three position switch comprises an earthing contact (100), and wherein the earthing contact is arranged coaxial to the tube shaped conductor
wherein the three position switch comprises a piston (60), and wherein the piston is configured to move axially within the tube shaped conductor;
wherein in a connected position the piston is at a position axially within the tube shaped conductor configured to enable current to flow to the cable, wherein in the connected position the piston connects a busbar (40) of the medium or high voltage switchgear to a cable contact (90) of the tube shaped conductor for connection of the cable, thereby enabling current to flow from the busbar to the cable, and wherein in the connected position the piston is isolated from the earthing contact;
wherein in an isolated position the piston is at a position axially within the tube shaped conductor such that current is not enabled to flow to the cable; and
wherein in an earthed position the piston is at a position axially within the tube shaped conductor such that the piston connects the tube shaped conductor to the earthing contact,
**characterized in that** the earthing contact (100) is arranged inside the tube shaped conductor (91).

2. Medium or high voltage switchgear with a three position switch according to claim 1, wherein in the isolated position the piston is electrically isolated from a busbar (40) of the medium or high voltage switchgear and the piston is electrically isolated from the earthing contact.

3. Medium or high voltage switchgear with a three position switch according to any of claims 1-2, wherein in the isolated position the piston is connected to the cable contact (90) of the tube shaped conductor for connection of the cable.

4. Medium or high voltage switchgear with a three position switch according to any of claims 1-3, wherein in the earthing position the piston is connected to the cable contact (90) of the tube shaped conductor for connection of the cable.

5. Medium or high voltage switchgear with a three position switch according to any of claims 1-4, wherein in the earthed position the position of the piston is configured to provide an indication to a user that the medium or high voltage switchgear is earthed.

6. Medium or high voltage switchgear with a three position switch according to any of claims 1-5, wherein in the isolated position the position of the piston is configured to provide an indication to a user that the medium or high voltage switchgear is isolated.

7. Medium or high voltage switchgear with a three position switch according to any of claims 1-6, wherein ceramic material is used as a thermal bridge between the cable contact and the earth contact.

8. A medium or high voltage switchgear with three three position switches according to any of claims 1-7, wherein the three three position switches are configured to be driven in parallel.

9. A medium or high voltage switchgear with three three position switches according to claim 8, wherein the respective pistons of each of the three position switches are configured to be driven in parallel.

## Patentansprüche

1. Mittel- oder Hochspannungsschaltgerät (1) mit einem Dreistellungsschalter, **dadurch gekennzeichnet, dass**
der Dreistellungsschalter einen röhrenförmigen Leiter (91) zum Anschluss eines Kabels umfasst und der Dreistellungsschalter einen Erdungskontakt (100) umfasst, und wobei der Erdungskontakt koaxial zu dem röhrenförmigen Leiter angeordnet ist; wobei der Dreistellungsschalter einen Kolben (60) umfasst, und wobei der Kolben so konfiguriert ist, dass er sich axial innerhalb des röhrenförmigen Leiters bewegt; wobei sich der Kolben in einer angeschlossenen Position an einer Position axial innerhalb des röhrenförmigen Leiters befindet, die so konfiguriert ist, dass Strom zu dem Kabel fließen kann, wobei der Kolben in der angeschlossenen Position eine Sammelschiene (40) des Mittel- oder Hochspannungsschaltgeräts mit einem Kabelkontakt (90) des röhrenförmigen Leiters zum Anschluss des Kabels verbindet, wodurch Strom von der Sammelschiene zu dem Kabel fließen kann, und wobei der Kolben in der angeschlossenen Position von dem Erdungskontakt isoliert ist; wobei sich der Kolben in einer isolierten Position an einer Position axial innerhalb des röhrenförmigen Leiters befindet, so dass kein Strom zu dem Kabel fließen kann; und wobei sich der Kolben in einer geerdeten Position an einer Position axial innerhalb des rohrförmigen Leiters befindet, so dass der Kolben den rohrförmigen Leiter mit dem Erdungskontakt verbindet,
**dadurch gekennzeichnet, dass** der Erdungskontakt (100) innerhalb des rohrförmigen Leiters (91) angeordnet ist.

2. Mittel- oder Hochspannungsschaltgerät mit einem Dreistellungsschalter nach Anspruch 1, wobei in der isolierten Position der Kolben von einer Sammelschiene (40) des Mittel- oder Hochspannungsschaltgeräts elektrisch isoliert ist und der Kolben vom Erdungskontakt elektrisch isoliert ist.

3. Mittel- oder Hochspannungsschaltgerät mit einem Dreistellungsschalter nach einem der Ansprüche 1 bis 2, wobei in der isolierten Position der Kolben mit dem Kabelkontakt (90) des rohrförmigen Leiters zum Anschluss des Kabels verbunden ist.

4. Mittel- oder Hochspannungsschaltgerät mit einem Dreistellungsschalter nach einem der Ansprüche 1-3, wobei in der Erdungsstellung der Kolben mit dem Kabelkontakt (90) des rohrförmigen Leiters zum Anschluss des Kabels verbunden ist.

5. Mittel- oder Hochspannungsschaltgerät mit einem Dreistellungsschalter nach einem der Ansprüche 1-4, wobei in der geerdeten Stellung die Position des Kolbens so konfiguriert ist, dass sie einem Benutzer anzeigt, dass das Mittel- oder Hochspannungsschaltgerät geerdet ist.

6. Mittel- oder Hochspannungsschaltgerät mit einem Dreistellungsschalter nach einem der Ansprüche 1-5, wobei in der isolierten Position die Position des Kolbens so konfiguriert ist, dass sie einem Benutzer anzeigt, dass das Mittel- oder Hochspannungsschaltgerät isoliert ist.

7. Mittel- oder Hochspannungsschaltgerät mit einem Dreistellungsschalter nach einem der Ansprüche 1-6, wobei keramisches Material als Wärmebrücke zwischen dem Kabelkontakt und dem Erdungskontakt verwendet wird.

8. Mittel- oder Hochspannungsschaltgerät mit drei Dreistellungsschaltern nach einem der Ansprüche 1-7, wobei die drei Dreistellungsschalter so konfiguriert sind, dass sie parallel betrieben werden.

9. Mittel- oder Hochspannungsschaltgerät mit drei Dreistellungsschaltern nach Anspruch 8, wobei die jeweiligen Kolben jedes der drei Stellungsschalter für einen Parallelantrieb konfiguriert sind.

## Revendications

1. Appareillage de commutation moyenne ou haute tension (1) avec commutateur à trois positions, **caractérisé en ce que** :
le commutateur à trois positions comprend un conducteur en forme de tube (91) pour la connexion d'un câble et le commutateur à trois positions comprend un contact de mise à la terre (100), et où le contact de mise à la terre est disposé de manière coaxiale par rapport au conducteur en forme de tube ;
où le commutateur à trois positions comprend un piston (60), et où le piston est configuré pour se déplacer axialement dans le conducteur en forme de tube ;
où, dans une position connectée, le piston se trouve à une position axiale à l'intérieur du conducteur en forme de tube configuré pour permettre au courant de circuler vers le câble, où, dans la position connectée, le piston connecte une barre omnibus (40) de l'appareillage de commutation moyenne ou haute tension à un contact de câble (90) du conducteur en forme de tube pour une connexion du câble, permettant ainsi au courant de circuler de la barre omnibus au câble, et où, dans la position connectée, le piston est isolé du contact de mise à la terre ;
où, dans une position isolée, le piston se trouve dans une position axiale à l'intérieur du conducteur en forme de tube de telle sorte que le courant ne puisse pas circuler vers le câble ; et
où, dans une position de mise à la terre, le piston se trouve dans une position axiale à l'intérieur du conducteur en forme de tube de telle sorte que le piston connecte le conducteur en forme de tube au contact de mise à la terre,
**caractérisé en ce que** le contact de mise à la terre (100) est disposé à l'intérieur du conducteur en forme de tube (91).

2. Appareillage de commutation moyenne ou haute tension avec commutateur à trois positions selon la revendication 1, dans lequel, dans la position isolée, le piston est électriquement isolé d'une barre omnibus (40) de l'appareillage de commutation moyenne ou haute tension et le piston est électriquement isolé du contact de mise à la terre.

3. Appareillage de commutation moyenne ou haute tension avec commutateur à trois positions selon l'une quelconque des revendications 1 et 2, dans lequel, dans la position isolée, le piston est relié au contact de câble (90) du conducteur en forme de tube pour la connexion du câble.

4. Appareillage moyenne ou haute tension avec commutateur à trois positions selon l'une quelconque des revendications 1 à 3, dans lequel, dans la position de mise à la terre, le piston est relié au contact de câble (90) du conducteur en forme de tube pour la connexion du câble.

5. Appareillage moyenne ou haute tension avec commutateur à trois positions selon l'une quelconque des revendications 1 à 4, dans lequel, dans la position de mise à la terre, la position du piston est configurée pour fournir une indication à un utilisateur que l'appareillage de commutation moyenne ou haute tension est mis à la terre.

6. Appareillage de commutation moyenne ou haute tension avec commutateur à trois positions selon l'une quelconque des revendications 1 à 5, dans lequel, dans la position isolée, la position du piston est configurée pour fournir une indication à un utilisateur que l'appareillage de commutation moyenne ou haute tension est isolé.

7. Appareillage de commutation moyenne ou haute tension avec commutateur à trois positions selon l'une quelconque des revendications 1 à 6, dans lequel un matériau céramique est utilisé comme pont thermique entre le contact de câble et le contact de terre.

8. Appareillage de commutation moyenne ou haute tension avec trois commutateurs à trois positions selon l'une quelconque des revendications 1 à 7, dans lequel les trois commutateurs à trois positions sont configurés pour être commandés en parallèle.

9. Appareillage de commutation moyenne ou haute tension avec trois commutateurs à trois positions selon la revendication 8, dans lequel les pistons respectifs de chacun des trois commutateurs à trois positions sont configurés pour être commandés en parallèle.
